# EUROPEAN PATENT SPECIFICATION

(11) **EP 1 431 614 B1**
(45) Date of publication and mention of the grant of the patent: **20.10.2010**
(21) Application number: 03468011.6
(22) Date of filing: 16.12.2003
(51) Int. Cl.: F16H 7/06, F16H 57/02, B66D 1/20

(54) **Winch reduction gear**
Getriebe eines Windwerks
Engrenage pour un treuil

(30) Priority: 16.12.2002 SI 200200303
(43) Date of publication of application: 23.06.2004
(73) Proprietor: Vitli Krpan Franc Pisek s.p., 3240 Smarje Pri Jelsah (SI)
(72) Inventor: Pisek, Franc, 3240 Smarje Pri Jelsah (SI)
(74) Representative: Flak, Antonija

(56) References cited:
- DE-A1- 19 950 230
- US-A- 2 930 585
- US-A- 3 985 047
- US-A- 4 390 161
- US-A- 4 553 738

## Description

### FIELD OF THE INVENTION

The invention relates to forestry equipment, and more particularly to winch reduction gears designed to change the number of revolutions of a forestry traction device.

### TECHNICAL PROBLEM

The technical problem solved by the device, which is the subject of the present invention, is a design and construction of a winch reduction gear, which enables dependable changing of number of revolutions of the driven shaft and the driving shaft and which will allow simple fixing of the reduction gear to the winch housing as well as easy and quick mounting and adjusting of the chains. Besides, the construction of the reduction gear should be such as to allow undemanding manufacturing and mounting procedures as well as smaller consumption of material in order to reduce the manufacturing costs.

### BACKGROUND TO THE DISCLOSURE

Various reduction gears designed for different driving mechanisms are known, providing the possibility of changing the number of revolutions of the driven and the driving shaft within the unchanging ratio.

In the patent SI9200195 a differential reduction gear is described, which enables reduction of revolutions by means of a toothed gearing connection of a first planetary wheel and a first satellite wheel, which runs on bearings of a first pin support and makes the connection with a second planetary wheel, running on the bearings of a shaft and making direct connection with a third planetary wheel, which then drives the fourth planetary wheel through a second satellite wheel. A shaft connects the first and the second planetary wheels. Due to difference in the number of revolutions between the third and the fourth planetary wheel, a tangential force is produced in the right differential of a second pin support driving a hub. The desired gear transmission ratios are created by means of adequate relations between the planetary wheels.

A solution of the winch reduction gear is known from the patent SI9300152 describing a planetary transmission gear having co-axial input and output shafts. The essential difference between this solution and the reduction gear according to the present invention is in the arrangement of the driven and the driving shaft.

Another forestry traction device is known from the patent SI9600333, however in this device the problem of reduction of revolutions of the winch drum is not solved.

In a previous design of a reduction gear by the Vitli Krpan manufacturer, both chain wheels are mounted on a single shaft and are covered by a common cover. Due to more compact mounting of the two ball bearings and of both chain wheels, the mounting of the reduction gear chain and of the winch drum chain is rather demanding. This construction of the reduction gear is also heavy and requires more material therefore its production price is higher.

A winch reduction gear according to the preamble of independent claim 1 is known from DE-A-199 50 230.

### DESCRIPTION OF THE INVENTION

The essential feature of the winch reduction gear according to the invention is a specific construction and arrangement of the winch driving part and the winch reduction part. The two rectangular fixing plates, by which the cardan shaft of the winch driving part and the reduction gear are fixed to the winch housing, are placed so that the axes along the longer sides of the said fixing plates are perpendicular. Such arrangement facilitates the placing of the reduction gear chain and the winch drum chain.

The winch reduction gear, which is the subject of the invention, is explained in detail by means of the following drawings showing:

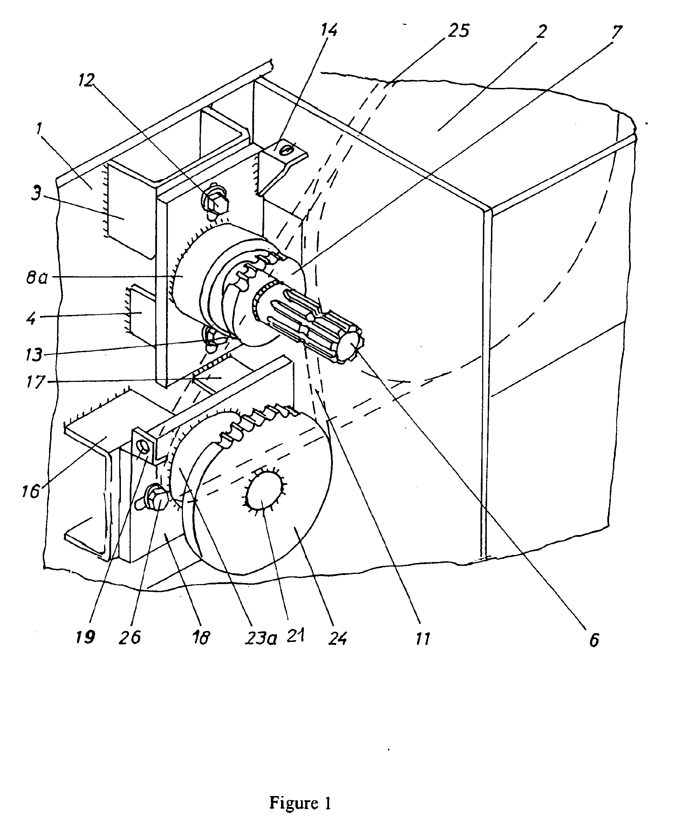

Figure 1 - perspective view of the winch reduction gear

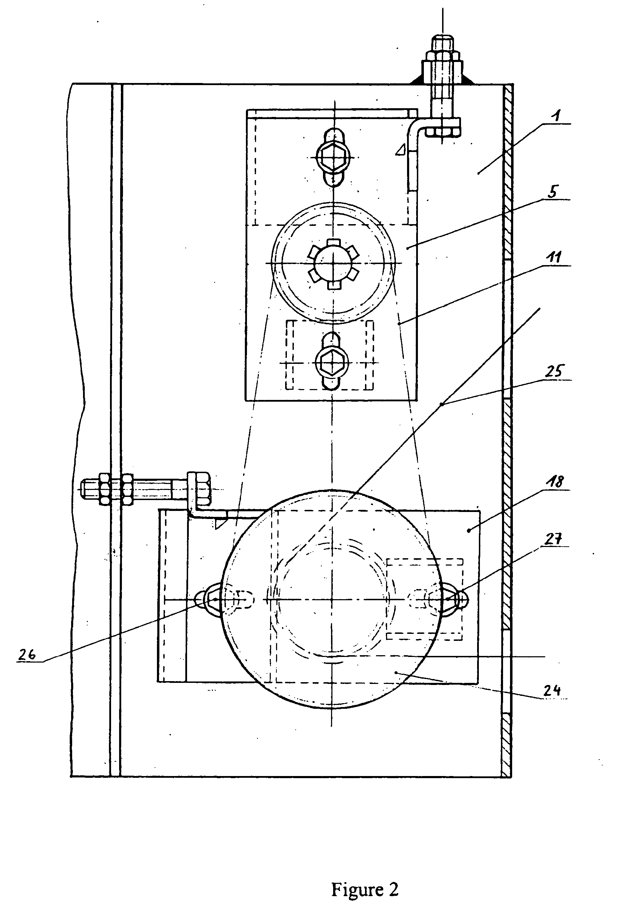

Figure 2 - horizontal projection of the winch reduction gear

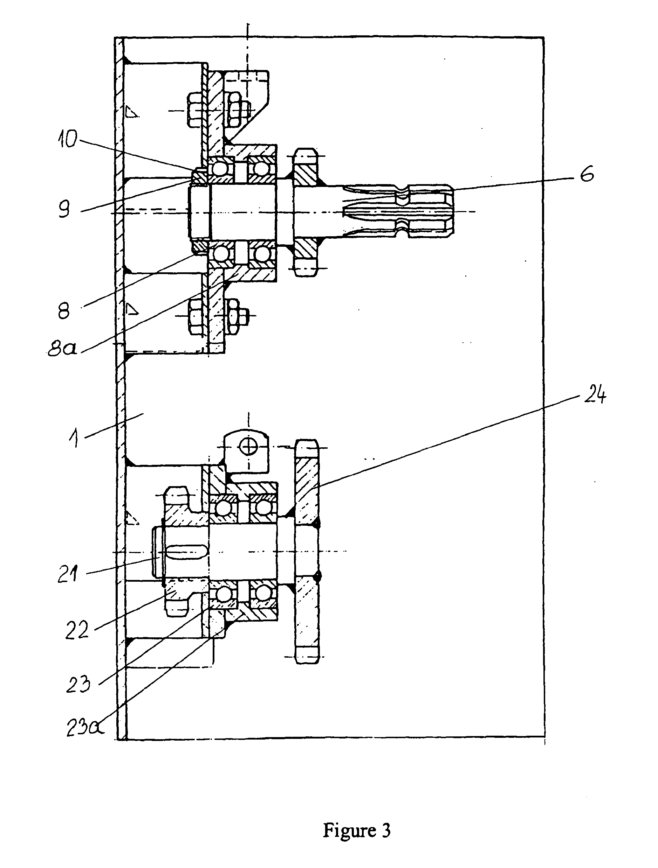

Figure 3 - side view of the winch reduction gear

The winch reduction gear according to the present invention consists of a winch driving part, containing a cardan shaft 6 with a toothed wheel 7 and a ball bearing 8, housed in a ball bearing housing 8a, and a winch reduction part, containing a driven shaft 21, a smaller chain wheel 22, a larger chain wheel 24, and a ball bearing 23, coupling the chain wheels 22 and 24. The winch driving part and the winch reduction part are both fixed onto the mechanism support plate 1 of the winch housing in such a way that the winch driving part is placed on the upper half and the reduction part is placed on the lower half of the mechanism support plate 1. A reduction gear chain 11 runs between the toothed wheel 7 of the cardan shaft 6 and the larger chain wheel 24 of the reduction gear, while the driving chain 25 of the winch driving drum 2 is placed on the smaller chain wheel 22 of the reduction gear.

The fixing assembly for the winch driving part consists of two holders 3 and 4, shaped in a form of a bridge and welded to the mechanism support plate 1, and a fixing plate 5, welded to the ball bearing housing 8a and fastened to the holders 3 and 4 by two screws 12 and 13. The lower holder 4 is smaller in size by half as compared to the upper holder 3. The cardan shaft 6, which protrudes through the round aperture in the middle of the fixing plate 5, is secured by means of a nut 9 and a screw retention piece 10.

The construction of the fixing assembly for the reduction part of the winch is basically equal to the construction of the fixing assembly for the winch driving part. The essential difference between the two fixing assemblies is in their positioning, namely, the axes running along the longer sides of the fixing plates 5 and 18 are positioned perpendicularly.

The fixing assembly for the winch reduction part consists of two holders 16 and 17, shaped in a form of a bridge and welded to the mechanism support plate 1, and a fixing plate 18, welded to the ball bearing housing 23a and fastened to the holders 16 and 17 by two screws 26, 27 with nuts. The right holder 17 is smaller in size by half as compared to the left holder 16.

In further possible embodiments of the winch reduction gear according to the invention, the set of both winch parts, namely the winch driving part and the winch reduction part, can be fixed to the mechanism support plate 1 in three different directions, turned for 90°, 180° or 270° by comparison with the arrangement of the set of both winch parts in the first embodiment of the invention, where the said set of winch parts is arranged in line with the vertical axis of the mechanism support plate (1).

In another embodiment of the winch reduction gear according to the invention the drum 2 can be positioned on the left side of the mechanism support plate 1.

The cover of the reduction gear is fastened to the fixing plates 5 and 18 with two long screws with nuts. To this end angular fastening pieces 14 and 19 are welded on the upper right corner of the fixing plate 5 and on the upper left corner of the fixing plate 18, respectively.

The essential advantage of the winch reduction gear according to the invention is basically equal construction of the fixing assemblies for the driving and the reduction part of the winch, as well as the geometry of the arrangement of the driving and the reduction part. These features together enable simple manufacturing, mounting and maintenance procedures. Equal design and construction of fixing assemblies reduces the required technological phases in manufacturing. By optimizing the bearing strength of the material also the amount of the required material is smaller. Thereby, the weight of the device is reduced considerably while its capacity, reliability and strength is the same as with the previous version of the device. As the space between the driving and the reduction part of the winch is large, the placing of the reduction gear chain and the driving chain can be executed quickly and easily.

## Claims

1. A winch reduction gear, comprising a winch driving part and a winch reduction part, wherein the winch driving part, consisting of a cardan shaft (6) with a toothed wheel (7) and a ball bearing (8), housed in a ball bearing housing (8a), and the winch reduction part, consisting of a driven shaft (21), a smaller chain wheel (22), a larger chain wheel (24) and a ball bearing (23), between the chain wheels (22) and (24), are both fixed onto a mechanism support plate (1) of a winch housing in such a way that the winch driving part is placed on the upper half of the mechanism support plate (1) and the reduction part is placed on the lower half of the mechanism support plate (1), wherein a reduction gear chain (11) runs between the toothed wheel (7) of the cardan shaft (6) and the larger chain wheel (24) of the reduction gear, while a driving chain (25) of a winch driving drum (2) is placed on the smaller chain wheel (22) of the reduction gear; **characterized in that** the construction of a fixing assembly for the winch reduction part is basically equal to the construction of a fixing assembly for the winch driving part, the essential difference between the two fixing assemblies being **in that** the axis along the longer sides of a rectangular fixing plate (5) for the winch driving part and the axis along the longer sides of a rectangular fixing plate (18) for the winch reduction part are positioned perpendicularly; that the fixing assembly for the winch driving part consists of two holders (3) and (4), shaped in a form of a bridge and welded to the mechanism support plate (1), and the fixing plate (5), welded to the ball bearing housing (8a) and fastened to the holders (3) and (4) by two screws (12, 13), the lower holder (4) being smaller in size by half as compared to the upper holder (3); that the cardan shaft (6), which protrudes through a round aperture in the middle of the fixing plate (5), is secured by means of a nut (9) and a screw retention piece (10); that the fixing assembly for the winch reduction part consists of two holders (16, 17), shaped in a form of a bridge and welded to the mechanism support plate (1), and the fixing plate (18), welded to a ball bearing housing (23a) and fastened to the holders (16) and (17) by two screws (26, 27) with nuts, the right holder (17) being smaller in size by half as compared to the left holder (16); and that a cover of the reduction gear is fastened to the fixing plates (5) and (18) with screws, for which an angular fastening piece (14) is welded on the upper right corner of the fixing plate (5) of the winch driving part and an angular fastening piece (19) is welded on the upper left corner of the fixing plate (18) of the winch reduction part.

2. A winch reduction gear according to claim 1 wherein the winch reduction gear is fixed to the winch housing by means of two long screws inserted through the angular fastening pieces (14, 19) and corresponding holes in the mechanism support plate (1).

3. A winch reduction gear wherein the set of winch driving part and winch reduction part is fixed to the mechanism support plate (1) in a position turned for 90° as regards the position of the said set in the first embodiment of the device as claimed in claim 1.

4. A winch reduction gear wherein the set of winch driving part and winch reduction part is fixed to the mechanism support plate (1) in a position turned for 180° as regards the position of the said set in the first embodiment of the device as claimed in claim 1.

5. A winch reduction gear wherein the set of winch driving part and winch reduction part is fixed to the mechanism support plate (1) in a position turned for 270° as regards the position of the said set in the first embodiment of the device as claimed in claim 1.

6. A winch reduction gear according to claim 1 wherein the winch driving drum (2) is placed on the left side of the mechanism support plate (1).

## Patentansprüche

1. Reduktionsgetriebe eines Windwerkes umfassend einen Antriebsteil und einen Reduktionsteil, wobei sowie der Antriebsteil bestehend aus einer Kardanwelle (6) mit einem Zahnrad (7) und einem sich in einem Kugelllagergehäuse (8a) befindenden Kugellager (8), als auch der Reduktionsteil bestehend aus einer Abtriebswelle (21), einem kleinen Kettenrad (22), einem größeren Kettenrad (24) und einem Kuggellager (23) zwischen den Kettenräder (22) und (24) auf einer Stützplatte (1) des Windewerkgehäuses derart befestigt sind, dass der Antriebsteil des Windewerkes auf der oberen Hälfte der Stützplatte (1) des Werkes angeordnet ist und der Reduktionsteil auf der unteren Hälfte der Stützplatte (1) des Werkes angeordnet ist, wobei eine Getriebekette (11) zwischen dem Zahnrad (7) der Kardanwelle (6) und dem größeren Kettenrad (24) des Reduktionsgetriebes verläuft, und eine Antriebskette (25) des Werkantriebtrommels (2) an den kleineren Kettenrad (22) des Reduktionsgetriebes angeordnet ist, **dadurch gekennzeichnet, dass** die Konstruktion einer Befestigungsanordnung für den Reduktionsteil des Windewerkes im Wesentlichen der Konstruktion einer Befestigungsanordnung des Antriebsteil des Windwerkes gleich ist, wobei der wesentliche Unterschied zwischen den genannten zwei Befestigungsanordnungen darin liegt, dass die Achse längs der längeren Seiten einer rechteckigen Befestigungsplatte (5) für den Antriebsteil des Windewerkes und die Achse längs der längeren Seiten einer rechteckigen Befestigungsplatte (18) für den Reduktionsteil des Windwerkes senkrecht positioniert sind; dass die Befestigungsanordnung für den Antriebsteil des Windewerkes zwei in Form einer Brücke geformte Halter (3) und (4), die an die Stützplatte (1) des Werkes geschweißt sind, und die Befestigungsplatte (5), die auf den Kugellagergehäuse (8a) geschweißt und auf die Halter (3) und (4) mit zwei Schrauben (12, 13) befestigt ist, umfasst, worin der untere Halter (4) um eine Hälfte kleiner ist als der obere Halter (3); dass die durch eine runde Öffnung in der Mitte der Befestigungsplatte (5) herausragende Kardanwelle (6) durch eine Mutter (9) und einen Schraubensicherungsteil (10) gesichert ist; dass die Befestigungsanordnung für den Reduktionsteil des Windewerkes zwei in Form einer Brücke geformte Halter (16, 17), die an die Stützplatte (1) des Werkes geschweißt sind, und die Befestigungsplatte (18), die auf den Kugellagergehäuse (23a) geschweißt und auf die Halter (16) und (17) mit zwei Schrauben (26, 27) mit Muttern befestigt ist, worin der rechte Halter (17) um eine Hälfte kleiner ist als der linke Halter (16); und dass ein Deckel des Getriebes an die Befestigungsplatten (5) und (18) mit Schrauben befestigt ist, wofür ein winkelförmiger Befestigungsteil (14) an die obere rechte Ecke der Befestigungsplatte (5) des Antriebsteils des Windewerkes geschweißt ist und ein winkelförmiger Befestigungsteil (19) an die obere linke Ecke der Befestigungsplatte (18) des Reduktionsteil des Windewerkes geschweißt ist.

2. Reduktionsgetriebe eines Windewerkes nach Anspruch 1, worin die Reduktionsgetriebe auf das Windewerkgehäuse mit zwei langen durch die winkelförmige Befestigungsteile (14, 19) und die entsprechende Löcher in der Stützplatte (1) des Windewerkes verlaufenden Schrauben befestigt ist.

3. Reduktionsgetriebe eines Windewerkes, worin die Anordnung des Antriebteils und des Reduktionsteils des Windewerkes auf die Stützplatte (1) des Windewerkes in eine um 90° gedrehte Lage hinsichtlich der Lage der Anordnung des ersten Ausführungsbeispiels wie nach Anspruch 1 befestigt ist.

4. Reduktionsgetriebe eines Windewerkes, worin die Anordnung des Antriebteils und des Reduktionsteils des Windewerkes auf die Stützplatte (1) des Windewerkes in eine um 180° gedrehte Lage hinsichtlich der Lage der Anordnung des ersten Ausführungsbeispiels wie nach Anspruch 1 befestigt ist.

5. Reduktionsgetriebe eines Windewerkes, worin die Anordnung des Antriebteils und des Reduktionsteils des Windewerkes auf die Stützplatte (1) des Windewerkes in eine um 270° gedrehte Lage hinsichtlich der Lage der Anordnung des ersten Ausführungsbeispiels wie nach Anspruch 1 befestigt ist.

6. Reduktionsgetriebe eines Windewerkes nach Anspruch 1, worin der Werkantriebtrommel (2) an der linken Seite der Stützplatte (1) des Windewerkes angeordnet ist.

## Revendications

1. Réducteur de treuil, comportant une partie entraînante et une partie réductrice de treuil, la partie entraînante comprenant un arbre de cardan (6) avec une roue dentée (7) et un roulement à billes (8) logé dans un boîtier de roulement à billes (8a), la partie réductrice étant composée d'un arbre entraîné (21), d'une petite roue de chaîne (22), d'une grande roue de chaîne (24), et d'un roulement à billes (23) entre les roues de chaînes (22) et (24), les parties entraînante et réductrice du treuil étant toutes les deux fixées sur une plaque de support (1) de mécanisme d'un boîtier de treuil, de sorte que la partie entraînante du treuil est placée sur la moitié supérieure de la plaque de support (1) du mécanisme, et que la partie réductrice est située sur la moitié inférieure de la plaque de support (1) du mécanisme, tandis qu'une chaîne du réducteur (11) passe entre la roue dentée (7) de l'arbre de cardan (6) et la grande roue de chaîne (24) du réducteur, tandis que la chaîne de transmission (25) du tambour d'entraînement du treuil (2) est placée sur la petite roue de chaîne (22) du réducteur, **caractérisé en ce que** la structure de l'assemblage de fixation de la partie réductrice du treuil est essentiellement identique à celle de l'assemblage de fixation de la partie entraînante, la différence essentielle entre les deux assemblages de fixation étant que l'axe à la longueur des parties longues de la plaque rectangulaire de fixation (5) pour la partie entraînante du treuil et l'axe à la longueur des parties longues de la plaque rectangulaire de fixation (18) pour la partie réductrice du treuil sont perpendiculaires ; **en ce que** l'assemblage de fixation pour la partie entraînante du treuil est composé de deux supports (3) et (4) en forme de pont et soudés à la plaque de support (1) du mécanisme, et de la plaque de fixation (5) soudée au boîtier de roulement à billes (8a) et rattachée aux supports (3) et (4) par deux vis (12, 13), le support inférieur (4) ayant des dimensions deux fois inférieures à celles du support supérieur (3) ; **en ce que** l'arbre de cardan (6), qui ressort à travers une ouverture ronde au centre de la plaque de fixation (5), est fixé par un écrou (9) et une pièce de rétention de vis (10) ; **en ce que** l'assemblage de fixation de la partie réductrice du treuil comprend deux supports (16, 17) en forme de pont et soudés à la plaque de support (1) du mécanisme, et la plaque de fixation (18) soudée à un boîtier du roulement à billes (23a) et fixée aux supports (16) et (17) par deux vis (26, 27) avec des écrous, le support de droite (17) ayant des dimensions deux fois inférieures à celles du support de gauche (16) ; et **en ce qu**'un couvercle du réducteur est fixé aux plaques de fixation (5) et (18) par vis, pour lesquelles un élément de fixation angulaire (14) est soudé à l'angle supérieur droit de la plaque de fixation (5) de la partie entraînante du treuil, et un autre élément de fixation angulaire (19) est soudé à l'angle supérieur gauche de la plaque de fixation (18) de la partie réductrice du treuil.

2. Réducteur de treuil selon la revendication 1, dans lequel le réducteur de treuil est fixé au boîtier du treuil par deux vis longues insérées à travers les éléments de fixation angulaire (14, 19) et les trous correspondant dans la plaque de support (1) du mécanisme.

3. Réducteur de treuil dans lequel l'ensemble des parties entraînante et réductrice du treuil est fixé à la plaque de support (1) du mécanisme dans une position ayant subi une rotation de 90° par rapport à la position dudit ensemble dans la première mode de réalisation du dispositif selon la revendication 1.

4. Réducteur de treuil dans lequel l'ensemble des parties entraînante et réductrice du treuil est fixé à la plaque de support (1) du mécanisme dans une position ayant subi une rotation de 180° par rapport à la position dudit ensemble dans la première mode de réalisation du dispositif selon la revendication 1.

5. Réducteur de treuil dans lequel l'ensemble des parties entraînante et réductrice du treuil est fixé à la plaque de support (1) du mécanisme dans une position ayant subi une rotation de 270° par rapport à la position dudit ensemble dans la première mode de réalisation du dispositif selon la revendication 1.

6. Réducteur de treuil dans lequel le tambour d'entraînement (2) du treuil est agencé sur la partie gauche de la plaque de support (1) du mécanisme.
